Europäisches Patentamt

European Patent Office

Office européen des brevets

(11) Veröffentlichungsnummer: **0 172 520**
**A2**

# (12) EUROPÄISCHE PATENTANMELDUNG

(21) Anmeldenummer: **85110095.8**

(22) Anmeldetag: **12.08.85**

(51) Int. Cl.⁴: **G 11 B 5/70**

(30) Priorität: **22.08.84 DE 3430819**

(43) Veröffentlichungstag der Anmeldung:
**26.02.86** Patentblatt **86/9**

(84) Benannte Vertragsstaaten:
**DE FR GB NL**

(71) Anmelder: **BASF Aktiengesellschaft**
**Carl-Bosch-Strasse 38**
**D-6700 Ludwigshafen(DE)**

(72) Erfinder: **Huebner, Werner**
**Hauptstrasse 48 c**
**D-6710 Frankenthal(DE)**

(72) Erfinder: **Melzer, Milena**
**Kirchenstrasse 116**
**D-6700 Ludwigshafen(DE)**

(72) Erfinder: **Koester, Eberhard, Dr.**
**Max-Slevogt-Strasse 23**
**D-6710 Frankenthal(DE)**

(72) Erfinder: **Baur, Reinhold, Dr.**
**Eschbachstrasse 1**
**D-7601 Ortenberg(DE)**

(72) Erfinder: **Sommermann, Friedrich, Dr.**
**Grimmelshausenstrasse 9**
**D-7640 Kehl(DE)**

(54) Verfahren zur Herstellung von magnetischen Aufzeichnungsträgern.

(57) Die Erfindung betrifft ein Verfahren zur Herstellung von magnetischen Aufzeichnungsträgern durch Dispergieren von pulverförmigem magnetischem Material mit Hilfe einer üblichen Dispergiereinrichtung in einem Gemisch aus organischem Lösungsmittel, organischem Polymerbindemittel, Dispergierhilfsmittel und weiteren üblichen Zusatzstoffen, schichtförmiges Auftragen der resultierenden Dispersion auf ein Trägermaterial und anschließendes Verfestigen der Schicht.

Verfahren zur Herstellung von magnetischen Aufzeichnungsträgern

Die Erfindung betrifft ein Verfahren zur Herstellung von magnetischen Aufzeichnungsträgern durch Dispergieren von pulverförmigem magnetischem Material mit Hilfe einer üblichen Dispergiereinrichtung in einem Gemisch aus organischem Lösungsmittel, organischem Polymerbindemittel, Dispergierhilfsmittel und weiteren üblichen Zusatzstoffen, schichtförmiges Auftragen der resultierenden Dispersion auf ein Trägermaterial und anschließendes Verfestigen der Schicht.

Die Herstellung von pulverförmigem magnetischem Material enthaltenden Dispersionen im Rahmen der Produktion von magnetischen Aufzeichnungsträgern ist bekannt. Diese Dispersionen bestehen aus dem pulverförmigen magnetischen Material, einem organischen Lösungsmittel oder -gemisch, mindestens einem in diesem Lösungsmittel(gemisch) löslichen oder dispergierbaren organischen Polymeren oder Präpolymeren, Dispergierhilfsmittel und weiteren organischen und/oder anorganischen Zusatzstoffen, wie Gleitmittel, Viskositätsregulatoren, Stabilisatoren, inerte anorganische Substanzen zur Regulierung der Leitfähigkeit, des Abriebs, der Rauhigkeit usw. Die Bereitung der Dispersionen aus den angeführten Komponenten geschieht in Dispergiereinrichtungen, im allgemeinen Mühlen genannt, mit deren Hilfe durch das Einwirken eines hohen Schergefälles, die pulverförmigen Materialien weitgehend in ihre Einzelteilchen getrennt und mit dem Bindemittel umhüllt werden. Hinsichtlich der für die magnetischen Aufzeichnungsschichten geeigneten Dispersionen ist es üblich mit sogenannten einstufigen oder zweistufigen Dispergierverfahren zu arbeiten. Beim einstufigen Dispergierverfahren wird die gesamte, in Lösungsmitteln gelöste Bindemittelmenge schon vor Anfang des Mahlvorganges zugesetzt. Beim meist durchgeführten zweistufigen Verfahren wird lediglich ein Teil, meist ein Drittel bis zu Hälfte der gesamten Bindemittelmenge vor Beginn des Mahlvorgangs zugesetzt und die restliche Menge erst dann eingerührt, wenn die Dispersion bereits homogen ist.

Diese bekannten Dispergierverfahren haben jedoch eine Reihe von Nachteilen. Der gesamte Dispergierprozeß verläuft langsam, insbesondere mit steigendem Bindemittelanteil steigt der notwendige Mahlaufwand. Zudem sind die in der ersten Stufe mit hohem Bindemittelanteil hergestellten Dispersionen empfindlich, d.h. bei ihrer Lagerung und bei der Zugabe der restlichen Bindemittelmengen kann es, wenn nicht besondere Bedingungen eingehalten werden, zu Reagglomerationen führen, wodurch die Homogenität der Dispersion beeinträchtigt wird. Solche Reagglomerationen wirken sich bereits in geringem Ausmaß hinsichtlich der Aufzeichnungseigenschaften der Magnetschicht nachteilig aus.

Sob/P

0172520

Aufgabe der Erfindung war es daher, ein Verfahren zur Herstellung von magnetischen Aufzeichnungsträgern bereitzustellen, das die angeführten Nachteile nicht aufweist. Insbesondere war es Aufgabe der Erfindung, die Dispergierung der magnetischen Materialien so zu gestalten, daß bei einer deutlichen Verringerung des Dispergieraufwandes sehr homogene und stabile Dispersionen erzielt werden, wodurch zudem eine wesentliche Verbesserung der magnetischen Eigenschaften und somit der Aufzeichnungseigenschaften der resultierenden magnetischen Aufzeichnungsträger bewirkt wird.

Es wurde nun gefunden, daß sich bei einem Verfahren zur Herstellung von magnetischen Aufzeichnungsträgern gemäß dem Oberbegriff des Patentanspruchs die Aufgabe in einfacher Weise lösen läßt, wenn das pulverförmige magnetische Material mit Hilfe üblicher Dispergiereinrichtungen in einer ersten Stufe zusammen mit Lösungsmittel und Dispergierhilfsmittel sowie gegebenenfalls mindestens einem Teil der üblichen Zusatzstoffe dispergiert wird und dann in einer zweiten Stufe eine Lösung des organischen Polymerbindemittels sowie die üblichen Zusatzstoffe zugemischt werden.

Bei der weiteren Ausarbeitung des erfindungsgemäßen Verfahrens hat es sich als zweckmäßig herausgestellt, bei magnetischen Aufzeichnungsträgern, welche nichtmagnetische anorganische Feststoffe als Zusatzstoffe in der Magnetschicht aufweisen, die Dispergierung dieser Feststoffe gleichzeitig mit dem pulverförmigen magnetischen Material in der ersten Stufe des Dispergiervorgangs durchzuführen.

Mit der das erfindungsgemäße Verfahren kennzeichnenden Unterteilung des Dispergiervorgangs lassen sich mit sonst üblichen Schichtzusammensetzungen in überraschender Weise besonders vorteilhafte magnetische Aufzeichnungsträger herstellen. Sie zeichnen sich insbesondere durch eine sehr glatte und homogene Bandoberfläche aus, der Richtfaktor, d.h. die Ausrichtung der magnetischen Teilchen in der Schicht, ist im Vergleich zu demjenigen, welcher sich beim Einsatz üblich bereiteter Dispersionen ergibt, angehoben und durch die bessere Dispergierung wird auch die Schaltfeldverteilung in der Magnetschicht einheitlicher. Alle diese Verbesserungen wirken sich in einer deutlichen Steigerung der Aufzeichnungsqualität der erfindungsgemäßen magnetischen Aufzeichnungsträger aus.

Die Herstellung der Dispersion gemäß dem erfindungsgemäßen Verfahren erfolgt in der Weise, daß das magnetische Material, das Dispergierhilfsmittel, das Lösungsmittel und gegebenenfalls die weiteren Zusatzstoffe in eine Mahleinrichtung, z.B. eine Kugelmühle, eine Rührwerksmühle, eine Spaltmühle, eingefüllt und je nach Mühlentyp dispergiert werden. Der Erfolg der Vordispergierung wird anhand der Feinkörnigkeit der Dispersion bei mikroskopischer Betrachtung ermittelt. Es hat sich als zweckmäßig erwiesen auf 1 Gew.-Teil magnetisches Material 0,5 bis 1,6 Gew.-Teile Lösungsmittel, 1 bis 10 Gew.-Teile Dispergierhilfsmittel sowie die übrigen Zusatzstoffe in den üblichen Mengen einzusetzen. Für den Fall, daß im Umfang der Zusatzstoffe anorganisches unmagnetisches Material enthalten ist, ist es angebracht, die entsprechende Menge dem magnetischen Material zuzurechnen und die Mengen der übrigen Komponenten anzupassen.

In der zweiten Stufe des erfindungsgemäßen Verfahrens wird nun die Bindemittellösung mit der bindemittelfreien Dispersion der ersten Stufe in einer für Mischprozesse dieser Art geeigneten Einrichtung mit möglichst hohem Scherkraftgefälle gemischt und homogenisiert. Zu diesem Zweck sind intensiv gerührte Mischbehälter einzusetzen.

Ansonsten entspricht die Zusammensetzung der Dispersion, welche im Rahmen der erfindungsgemäßen Herstellung von magnetischen Aufzeichnungsträgern eingesetzt wird, dem Stand der Technik.

Als magnetische Materialien werden bevorzugt feinteiliges stäbchenförmiges Gamma-Eisen(III)oxid mit einer durchschnittlichen Teilchengröße von 0,1 bis 2 µm und insbesondere von 0,1 bis 0,9 µm oder stäbchenförmiges Chromdioxid der gleichen Teilchenstruktur, wie beim Eisenoxid angegeben, verwendet. Weitere geeignete Materialien sind Gamma-Eisen(III)oxid mit Dotierungen von Schwermetallen, insbesondere von Kobalt, feinteilige Metallegierungen von Eisen, Kobalt und/oder Nickel sowie geeignete Ferritmaterialien.

Als Bindemittel für die Dispersion des feinteiligen magnetischen Materials können die für die Herstellung von Magnetschichten bekannten Bindemittel verwendet werden, wie ein in üblichen Lösungsmitteln lösliches Copolyamid, ein Polyvinylformal, ein Polyurethanelastomer, Mischungen von Polyisocyanaten und höhermolekularen Polyhydroxylverbindungen oder Vinylchloridcopolymerisate mit über 60 % an Vinylchlorid-Molekülbausteinen, z.B. ein Vinylchloridcopolymerisat mit einem oder mehreren Comonomeren, wie ein Vinylester einer Monocarbonsäure mit 2 bis 9 C-Atomen, oder ein Ester eines aliphatischen Alkohols mit 1 bis 9 C-Atomen und einer ethylenisch ungesättigten Carbonsäure mit 3 bis 5 C-Atomen, wie die Ester der Acrylsäure, Methacrylsäure oder Maleinsäure, oder ein Copolymer des Vinylchlorids mit einer oder mehreren dieser Carbonsäuren selbst als Comonomerem oder hydroxylgruppenhaltige Vinylchloridcopolymerisate, die durch partielle Verseifung von Vinylchlorid-Vinylester-Copolymerisaten oder direkte Copolymerisation von Vinylchlorid mit hydroxylgruppenhaltigen Monomeren, wie Allylalkohol oder 4-Hydroxybutyl- oder 2-Hydroxyethyl--(meth)-acrylat hergestellt werden können. Ferner sind als Bindemittel geeignet Abmischungen von einem oder mehreren Polyurethanelastomeren mit Polyvinylformalen, Phenoxyharzen und PVC-Copolymerisaten der oben angegebenen Zusammensetzung. Als Polyurethanelastomere-Binder werden handelsübliche elastomere Polyurethane aus Adipinsäure, 1,4-Butandiol und 4,4'-Diisocyanatodiphenylmethan bevorzugt angewandt. Ebenfalls vorteilhaft sind OH-gruppenhaltige Polyharnstoffurethanbindemittel, die mit Polyisocyanat vernetzt werden und wobei das OH-gruppenhaltige Polyharnstoffurethan durch Umsetzung eines Polydiols, eines Diols und eines primären oder sekundären Aminoalkohols und gegebenenfalls eines Triols mit einem Diisocyanat erhalten werden.

Magnetdispersionen, die sich besonders für die Herstellung von starren magnetischen Aufzeichnungsplatten eignen, enthalten bevorzugt Bindemittel wie Epoxidharze, Phenoxyharze, Aminoplast-Vorkondensate, Polyesterharze, Polyurethane oder Polyurethanbildner und Mischungen solcher Bindemittel miteinander als auch mit anderen Bindemitteln, wie Polycarbonaten oder Vinylpolymeren, z.B. Vinylchlorid- oder Vinylidenchlorid-Copolymere oder hitzehärtbare Acrylat- oder Methacrylat-Copolymere.

Den Dispersionen können weitere Zusatzstoffe zur Herstellung der Magnetschichten, beispielsweise geringe Monocarbonsäureanteile, Gemische oder Ester derselben sowie Füllstoffe, wie Ruß, Graphit, Quarzmehl, unmagnetisches $\alpha$-Fe$_2$O$_3$ und/oder Pulver auf Silicatbasis und Mittel zur Verbesserung des Verlaufs, wie geringe Mengen Siliconöl, zugesetzt werden. Diese Zusätze sollen zweckmäßigerweise insgesamt 12 Gew.%, bevorzugt 8 Gew.%, bezogen auf das magnetische Material, nicht überschreiten.

Die Magnetdispersion wird mit Hilfe üblicher Beschichtungsmaschinen, z.B. mittels eines Linealgießers, auf den nichtmagnetisierbaren Träger aufgetragen. Als nichtmagnetische und nichtmagnetisierbare Träger lassen sich die üblichen Trägermaterialien verwenden, insbesondere Folien aus linearen Polyestern, wie Polyethylenterephthalat, im allgemeinen in Stärken von 1 bis 200 µm und insbesondere von 6 bis 36 µm. Bevor die noch flüssige Beschichtungsmischung auf dem Träger getrocknet wird, was zweckmäßigerweise bei Temperaturen von 50 bis 90°C während 2 bis 5 Minuten geschieht, werden die anisotropen Magnetteilchen durch die Einwirkung eines Magnetfeldes entlang der vorgesehenen Aufzeichnungsrichtung orientiert. Anschließend können die Magnetschichten auf üblichen Maschinen durch Hindurchführen zwischen geheizten und polierten Walzen, gegebenenfalls bei Anwendung von Druck und Temperaturen von 50 bis 100°C, vorzugsweise 60 bis 80°C, geglättet und verdichtet werden. Die Dicke der Magnetschicht beträgt im allgemeinen 1 bis 20 µm.

Die Vorteile des erfindungsgemäßen Verfahrens werden nachstehend anhand der Beispiele im Vergleich zum Stand der Technik näher erläutert.

Beispiel 1

In einer Kanne von 20 l Rauminhalt wurden 5000 g $\gamma$-Fe$_2$O$_2$ mit einer spezifischen Oberfläche nach BET von 18 m$^2$/g und einer Koerzitivfeldstärke von 26,5 kA/m mit 100 g eines Dispergiermittels, das aus einer 50 %igen Lösung eines Salzes aus langkettigen Polyaminamiden und eines hochmolekularen sauren Esters in Toluol besteht, und mit 6000 g eines aus gleichen Gewichtsteilen von Tetrahydrofuran und Dioxan bestehenden Lösungsmittelgemisches unter Rühren gründlich zusammengerührt.

Diese Mischung wurde anschließend in einer mit 420 ml Stahlkugeln (∅ 1,5 mm) gefüllten Laborrührwerksmühle (Typ Dyno Mill KDL) bei einer Temperatur von 35°C mit einem Durchsatz von 10 kg/h dispergiert. Nach zwei Durchgängen durch diese Mühle wurde, gemäß mikroskopischer Betrachtung der Handabstriche, eine gute Feinheit des Mahlguts erreicht.

Zu dieser Vorphasendispersion wurde daraufhin 190 g einer 20 %igen Lösung eines Copolymers aus Vinylchlorid, Dimethylmaleinat und Diethylmaleinat im Verhältnis 80:10:10 und einem K-Wert von 60 im oben genannten Lösungsmittelgemisch, 430 g einer 13 %igen Lösung eines Polyesterpolyurethans mit einem K-Wert von 60, hergestellt aus einem Polyester aus Butandiol und Adipinsäure, aus Butandiol, Trimetyhlolpropan und Diphenylmethandiisocyanat, in gleichem Lösungsmittelgemisch, 5,0 g Siliconöl, 5,0 g Hydrochinon, 10,0 g n-Butylstearat und 50,0 g Isostearinsäure zugesetzt und eine Stunde lang unter intensivem Rühren homogenisiert.

Die erhaltene Dispersion wurde unter Druck durch einen Filter mit 5 µm Porenweite filtriert und unmittelbar vor dem nachfolgenden Auftrag auf eine 12 µm dicke Polyethylenterephthalatfolie mittels eines üblichen Linealgießers unter kräftigem Rühren mit 22 g einer 75 %igen Lösung eines Triisocyanats aus 3 mol Toluylendiisocyanat und 1 mol Trimethylolpropan in Ethylacetat versehen. Die beschichtete Folie wurde nach Durchlaufen eines Magnetfeldes zum Ausrichten der Magnetteilchen bei Temperaturen zwischen 50 und 90°C getrocknet. Nach der Trocknung wurde die Magnetschicht durch Hindurchführen zwischen auf 70°C beheizten Walzen unter einem Liniendruck von 200 kp/cm verdichtet und geglättet und dann in 3,81 mm breite Bänder geschnitten. Die Vernetzungsreaktion verlief während der und kurz nach der Bandherstellung. Die Dicke der fertigen Magnetschicht betrug 4,5 µm.

0172520

Die Messung der magnetischen Eigenschaften wurde in einem Meßfeld von 100 kA/m durchgeführt. Die elektroakustischen Werte wurden gemäß DIN 45 401, DIN 45 403 und DIN 45 512, Bl. 12, gegen das Bezugsband IEC I geprüft. Die Oberflächenrauhigkeit wurde als gemittelte Rauhtiefe $R_z$ gemäß DIN 4768 Blatt 1 bestimmt.

Die Eigenschaften des Bandes sind in der Tabelle 1 aufgeführt.

Vergleichsversuch 1

In einer Kanne von 20 l Rauminhalt wurden 5000 g $\gamma\text{-Fe}_2\text{O}_3$ mit einer spezifischen Oberfläche nach BET von 18 $m^2$/g und einer Koerzitivfeldstärke von 26,5 kA/m mit 100 g eines Dispergiermittels, das aus einer 50 %igen Lösung eines Salzes aus langkettigen Polyaminamiden und eines hochmolekularen sauren Esters in Toluol besteht, und mit 6000 g eines aus gleichen Gewichtsteilen von Tetrahydrofuran und Dioxan bestehenden Lösungsmittelgemisches und mit 190 g einer 20 %igen Lösung eines Copolymers von Vinylchlorid, Dimethylmaleinat und Diethylmaleinat im Verhältnis 80:10:10 und einem K-Wert von 60 in oben genanntem Lösungsmittel unter Rühren gründlich vermischt.

Diese Mischung wurde anschließend in einer mit 420 ml Stahlkugeln (Ø 1,5 mm) gefüllten Laborrührwerksmühle (Typ Dyno Mill KDL) bei einer Temperatur von 35°C mit einem Durchsatz von 10 kg/h dispergiert. Die Feinheit des Mahlguts wurde nach jedem Durchgang mikroskopisch anhand des Handabstrichs beurteilt. Nach dem zweiten Durchgang durch die Mühle lag die Feinheit des Mahlguts noch deutlich unter der gemäß Beispiel 1. Das Dispergieren wurde bis zum sechsten Durchgang fortgesetzt, ohne daß die Oberflächenstörungen beseitigt werden konnten.

Zu dieser Vorphasendispersion wurde daraufhin 430 g einer 13 %igen Lösung eines Polyesterpolyurethans mit einem K-Wert von 60, hergestellt aus einem Polyester aus Butandiol und Adipinsäure, aus Butandiol, Trimethylolpropan und Diphenylmethandiisocyanat in oben genannten Lösungsmittelgemisch, 5,0 g Siliconöl, 5,0 g Hydrochinon, 10,0 g n-Butylstearat und 50,0 g Isostearinsäure zugesetzt und eine Stunde lang unter intensivem Rühren homogenisiert.

Die Verarbeitung der Dispersion zu Magnetbändern sowie ihre Prüfung erfolgte wie in Beispiel 1 beschrieben.

Die Eigenschaften des Bandes sind in der Tabelle 1 aufgeführt.

**0172520**

Tabelle 1

|  | Beispiel 1 | Vgl.Vers. 1 |
|---|---|---|
| Rauhigkeit $R_z$ [μm] vor Satinage | 0,7 | 1,5 |
| nach Satinage | 0,28 | 0,36 |
| **Magnetwerte** |  |  |
| Koerzitivfeldstärke [kA/m] | 26,0 | 26,2 |
| remanente Magnetisierung [mT] | 178 | 170 |
| relative Remanenz | 0,89 | 0,86 |
| Richtfaktor | 3,2 | 2,9 |
| **Elektroakustische Werte** |  |  |
| (Bezugsband IEC I) |  |  |
| Empfindlichkeit 315 Hz | + 0,5 | ± 0 |
| Empfindlichkeit 10 kHz | ± 0 | − 2 |
| Aussteuerbarkeit 315 Hz | + 0,5 | 0 |
| Aussteuerbarkeit 10 kHz | ± 0 | − 2,5 |

## Beispiel 2

In einer Stahlkugelmühle von 6 1 Rauminhalt, gefüllt mit 8 kg Stahlkugeln (⌀ 4-6 mm), wurden 900 g eines Chromdioxids mit einer Koerzitivfeldstärke von 40 kA/m und 900 g eines Lösungsmittelgemisches aus gleichen Teilen Tetrahydrofuran und Dioxan eingefüllt. Weiterhin wurden 18 g Zinkoleat zugesetzt. Dieses Gemisch wurde 48 Stunden lang dispergiert. Daraufhin wurden 1294 g einer 12,5 %igen Lösung eines Polyesterpolyurethans mit einem K-Wert von 60, hergestellt aus einem Polyester aus Butandiol und Adipinsäure (0,42 Mol), Butandiol (0,55 Mol), Trimethylolpropan (0,03 Mol) und Diphenylmethandiisocyanat (1,05 Mol) in oben genanntem Lösungsmittelgemisch und 202 g einer 20 %igen Lösung eines Phenoxiharzes aus Bisphenol A und Epichlorhydrin mit einem mittleren Molgewicht von 30.000 und einem Hydroxylgruppengehalt von 6 %, gleichfalls in dem genannten Lösungsmittelgemisch, dazu noch 18 g n-Butylstearat und 4 g Stearinsäure zugesetzt und weitere 16 h dispergiert.

Die erhaltene Dispersion wurde unter Druck durch einen Filter mit 5 μm Porenweite filtriert und dann mittels eines üblichen Linealgießers auf eine 19 μm dicke Polyethylenterephthalatfolie aufgetragen.

**0172520**

Die beschichtete Folie wurde nach Durchlaufen eines Magnetfeldes zur Ausrichtung der Chromdioxid-Teilchen bei Temperaturen zwischen 50 und 90°C getrocknet. Nach der Trocknung wurde die beschichtete Folie durch Hindurchführen zwischen auf 80°C beheizten Walzen unter einem Liniendruck von 200 kp/cm verdichtet und geglättet und dann in 1/2 Zoll breite Bänder für Videoanwendung geschnitten.

Die Messung der magnetischen Eigenschaften wurde in einem Meßfeld von 160 kA/m durchgeführt. Die Oberflächenrauhigkeit wurde als gemittelte Rauhtiefe $R_z$ gemäß DIN 4768 Blatt 1 bestimmt. Die Videoeigenschaften wurden gegen das VHS-Bezugsband auf dem VHS-Recorder der Firma Victor Company of Japan ermittelt. Die Meßergebnisse sind in der Tabelle 2 angegeben.

Vergleichsversuch 2

In einer Stahlkugelmühle von 6 l Rauminhalt, gefüllt mit 8 kg Stahlkugeln (∅ 4 bis 6 mm), wurden 900 g eines Chromdioxids mit einer Koerzitivfeldstärke von 40 kA/m und 900 g eines Lösungsmittelgemisches aus gleichen Teilen Tetrahydrofuran und Dioxan eingefüllt. Weiterhin wurden 18 g Zinkoleat, 647 g einer 12,5 %igen Lösung eines Polyesterpolyurethans mit einem K-Wert von 60, hergestellt aus einem Polyester aus Butandiol und Adipinsäure (0,42 Mol), Butandiol (0,55 Mol), Trimethylolpropan (0,03 Mol) und Diphenylmethandiisocyanat (1,05 Mol) in oben genanntem Lösungsmittelgemisch und 101 g einer 20 %igen Lösung eines Phenoxiharzes aus Bisphenol A und Epichlorhydrin mit einem mittleren Molgewicht von 30.000 und einem Hydroxylgruppengehalt von 6 %, gleichfalls in dem genannten Lösungsmittelgemisch, zugesetzt. Dieses Gemisch wurde 92 Stunden dispergiert. Danach wurden 647 g der gleichen Polyesterpolyurethanlösung, 101 g der gleichen Phenoxiharzlösung, 18 g n-Butylstearat und 4 g Stearinsäure zugesetzt und weitere 24 Stunden dispergiert.

Die erhaltene Dispersion wurde in gleicher Weise wie in Beispiel 2 beschrieben zu Bändern weiterverarbeitet und die Bänder geprüft. Die Meßergebnisse sind in Tabelle 2 aufgeführt.

0172520

Tabelle 2

|  | Beispiel 2 | Vgl.Vers. 2 |
|---|---|---|
| Rauhigkeit $R_z$ [μm] vor Satinage | 0,40 | 0,59 |
| nach Satinage | 0,15 | 0,15 |
| **Magnetwerte** | | |
| Koerzitivfeldstärke [kA/m] | 39,5 | 40,2 |
| remanente Magnetisierung [mT] | 158 | 127 |
| relative Remanenz | 0,86 | 0,80 |
| Richtfaktor | 2,8 | 2,0 |
| Magnetschichtdicke [μm] | 3,5 | 3,6 |
| **Videoeigenschaften** (Bezugsband VHS) | | |
| Hochfrequenzpegel 4,8 MHz [ dB] | + 1,0 | ± 0 |
| Chrompegel 630 kHz " | + 4,8 | + 3,5 |
| Luminanz S/N fg. " | + 0,4 | - 1,0 |
| Luminanz S/N bew. " | + 0,8 | - 1,0 |
| Chroma S/N " | + 0,6 | ± 0 |

Beispiel 3

Zur Herstellung eines üblichen Chrom-Audiobandes wurden im Ansatzbehälter 5000 g Chromdioxid mit einer spezifischen Oberfläche nach BET von 26 $m^2$/g und einer Koerzitivfeldstärke von 41 kA/m mit 5000 g aus gleichen Gewichtsteilen bestehendem Lösungsmittelgemisch von Tetrahydrofuran und Dioxan gemischt und dann mit 125 g Zinkoleat und 12,5 g Silikonöl gründlich durchmischt. Diese Mischung wurde in einer Rührwerkskugelmühle bei 25 bis 30°C Dispergiertemperatur in Kreisfahrweise eine Stunde dispergiert. Eine Kontrolle von nach dieser Zeit angefertigten Handabstrichen ergab eine vollkommen homogene, glatte Bandoberfläche.

Zu dieser Vorphasendispersion wurden 11.340 g Mischlack, bestehend aus 10 % in dem Lösungsmittelgemisch THF/Dioxan im Verhältnis 2:1 gelöstem Lack, der als Umsetzungsprodukt eines Polyesterols aus Butandiol und Adipinsäure mit Diphenylmethandiisocyanat und Butandiol als Kettenverlängerer (K-Wert 62) sowie ein mit Formaldehyd acetalisierter Polyvinylalkohol mit einem K-Wert von 65, zugegeben und eine halbe Stunde homogenisiert. Nach Druckfiltration dieser Dispersion über 1 μm Patronenfilter wurde, wie in Beispiel 1 beschrieben, beschichtet und kalandriert. Die Eigenschaften des fertigen Bandes sind in Tabelle 3 angegeben.

**0172520**

Vergleichsversuch 3

Es wurden 5000 g Chromdioxid mit einer spez. Oberfläche nach BET von 26 $m^2$/g und einer Koerzitivfeldstärke von 41 kA/m mit 2800 g aus gleichen Gewichtsteilen THF/Dioxan bestehenden Lösungsmittelgemisches sowie mit 4500 g des in Beispiel 3 beschriebenen Mischlaches und 125 g Zinkoleat gemischt. Diese Mischung wurde dann solange in einer Rührwerksmühle in Kreisfahrweise dispergiert bis die Kontroll-Handabstriche eine glatte Bandoberfläche ergaben, was nach zwei Stunden erzielt wurde. Zu dieser Vorphase wurden dann 6830 g des schon genannten Mischlaches zusammen mit 12,5 g Silikonöl hinzugegeben und nochmals eine Stunde homogenisiert. Die Beschichtung und Prüfung erfolgte wie in Beispiel 1 angegeben.

Tabelle 3

|  | Beispiel 3 | Vgl.Vers. 3 |
|---|---|---|
| Rauhigkeit $R_z$ [μm] vor Satinage | 0,50 | 0,74 |
| nach Satinage | 0,14 | 0,20 |
| **Magnetwerte** |  |  |
| Koerzitivfeldstärke [kA/m] | 40,9 | 40,7 |
| remanente Magnetisierung [mT] | 173 | 168 |
| Richtfaktor | 3,4 | 2,9 |
| Schichtstärke [μm] | 4,5 | 4,5 |
| **Elektroakustische Werte** |  |  |
| (Bezugsband IEC II C401R) |  |  |
| Empfindlichkeit 315 Hz [dB] | + 1,1 | + 0,6 |
| Empfindlichkeit 10 kHz [dB] | + 2,4 | + 1,7 |
| Aussteuerbarkeit 315 Hz [dB] | + 2,5 | + 1,9 |
| Aussteuerbarkeit 10 kHz [dB] | + 2,2 | + 1,7 |
| Kopierdämpfung [dB] | 49 | 49 |
| Gesamtdispergierzeit pro kg fertige Dispersion (min) | 4,2 | 10,2 |

0172520

## Patentansprüche

1. Verfahren zur Herstellung von magnetischen Aufzeichnungsträgern durch Dispergieren von pulverförmigem magnetischem Material in einem Gemisch aus Lösungsmittel, organischem Polymerbindemittel, Dispergierhilfsmittel und weiteren üblichen Zusatzstoffen, schichtförmiges Auftragen der Dispersion auf ein Trägermaterial und anschließendes Verfestigen der Schicht, dadurch gekennzeichnet, daß das pulverförmige Material mit Hilfe üblicher Dispergiereinrichtungen in einer ersten Stufe zusammen mit Lösungsmittel und Dispergierhilfsmittel dispergiert wird und dann in einer zweiten Stufe eine Lösung des organischen Polymerbindemittels sowie die üblichen Zusatzstoffe zugemischt werden.

2. Verfahren gemäß Anspruch 1, dadurch gekennzeichnet, daß das pulverförmige magnetische Material mit Hilfe üblicher Dispergiereinrichtungen in einer ersten Stufe zusammen mit Lösungsmittel, Dispergierhilfsmittel sowie mindestens einen Teil der üblichen Zusatzstoffe dispergiert wird und dann in einer weiteren Stufe eine Lösung des organischen Polymerbindemittels sowie gegebenenfalls weitere übliche Zusatzstoffe zugemischt werden.